(19) **Europäisches Patentamt / European Patent Office / Office européen des brevets**

(11) **EP 3 974 988 B1**

(12) **EUROPEAN PATENT SPECIFICATION**

(45) Date of publication and mention
of the grant of the patent:
**29.03.2023 Bulletin 2023/13**

(21) Application number: **20198129.7**

(22) Date of filing: **24.09.2020**

(51) International Patent Classification (IPC):
**G06F 11/20** *(2006.01)*

(52) Cooperative Patent Classification (CPC):
**G06F 11/2035**

(54) **SELF-HEALING SYSTEM ARCHITECTURE BASED ON REVERSIBLE LOGIC**

SELBSTHEILENDE SYSTEMARCHITEKTUR BASIEREND REVERSIBLER LOGIK

ARCHITECTURE DE SYSTÈME D'AUTO-RÉPARATION BASÉE SUR UNE LOGIQUE RÉVERSIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2022 Bulletin 2022/13**

(73) Proprietor: **Imec VZW
3001 Leuven (BE)**

(72) Inventors:
 • **DEY, Bappaditya
  3001 Leuven (BE)**
 • **KIM, Ryan Ryoung han
  3001 Leuven (BE)**

 • **SHERAZI, Syed Muhammad Yasser
  3001 Leuven (BE)**

(74) Representative: **AWA Sweden AB
Box 5117
200 71 Malmö (SE)**

(56) References cited:
**WO-A1-2010/060923     US-A1- 2016 371 147**

 • **CANHAM R ET AL: "An embryonic array with
  improved efficiency and fault tolerance",
  EVOLVABLE HARDWARE, 2003.
  PROCEEDINGS. NASA/DOD CONFERENCE ON
  JULY 9-11, 2003, PISCATAWAY, NJ, USA,IEEE, 9
  July 2003 (2003-07-09), pages 275-282,
  XP010648239, ISBN: 978-0-7695-1977-7**

## Description

Technical field

The present disclosure generally relates to the field semiconductor architectures for computing. More in particular, the present invention relates to an embryonic cell for a self-healing system architecture.

Background

With the trends of modern technology, it may be envisaged that future semiconductor products, such as for example central processing units (CPUs), system-on-chip (SoC) designs, or similar, are all expected to be both smaller in size, more powerful in terms of computation power, more reliable, and also more energy efficient when compared with their counterparts available today.

While ongoing advancements in semiconductor manufacturing continues to push the boundaries for how many transistors that may be placed within a predefined area (or volume), the increased density of transistors also continues to pose a problem in form of how to e.g. handle the excessive levels of generated heat. As a result, excessive power consumption has emerged as a significant bottleneck for future highperformance computational devices and has been listed as a crucial challenge in various roadmaps for future devices. Simultaneously, with the emergence of more and more complex systems and processes, a capability of self-healing of the various functional cells included in semiconductor (digital) circuits is desired in order to guarantee reliability. It may however be difficult to implement such self-healing capabilities, often relying on adding multiple redundant functional cells, without also increasing area overhead and reducing computational throughput.

US 2016/371147 A1 discloses a reconfigurable device including a configuration information storage memory, a state transition management unit, and a data path unit. When a failure is not detected in either of tiles T1 and T2 provided in the data path unit, the state transition management unit selects the configuration information item so that a first processing circuit is configured using the tiles T1 and T2, while when a failure is detected in the tile T2, the state transition management unit selects the configuration information item so that after a first intermediate processing circuit is configured using the tile T1 in which no failure is detected, a second intermediate processing circuit is configured again using the tile T1 in order to achieve the first processing circuit.

WO 2010/060923 A1 discloses a system comprising: a reconfigurable hardware platform; a plurality of hardware units defined as cells adapted to be programmed to provide self-organization and self-maintenance of the system by means of implementing a program expressed in a programming language defined as DNA language. Each cell is adapted to communicate with one or more other cells in the system. The system further comprises a converter program adapted to convert keywords from the DNA language to a binary DNA code. The self-organisation comprises that the DNA code is transmitted to one or more of the cells, and each of the one or more cells is adapted to determine its function in the system. If a fault occurs in a first cell and the first cell ceases to perform its function, self-maintenance is performed by that the system transmits information to the cells that the first cell has ceased to perform its function, and then the self-organisation is performed again in order to provide that a second cell undertakes the function of the first cell. Canham R et al ("An embryonic array with improved efficiency and tolerance", EVOLVABLE HARDWARE 2003. PROCEEDINGS. NASA/DOD CONFERENCE ON JULY 9-11, 2003, PISCATAWAY, NJ, USA, IEEE, 2003-07-09, pages 275-282, ISBN: 978-0-7695-1977-7) discloses an array that only stores enough configuration data to accommodate a single fault or update. Once this has occurred the system can reconfigure itself to be prepared for further faults or changes; this occurs in the background while the array still functions

Summary

To at least partly remedy the above identified issues, the present disclosure provides an embryonic cell for a self-healing system architecture, and a self-healing system architecture including two or more such embryonic cells, as defined by the independent claims. Further embodiments are defined in the dependent claims.

According to a first aspect of the present disclosure, an embryonic cell for a self-healing system architecture is provided. The cell includes at least a first input and a second input, at least one output, and a functional block. The functional block is configurable to set the at least one output based on at least one of the first input and the second input, using either one of a plurality of functions. The cell is configurable to operate in a first state or a second state different from the first state. The cell is further configured to, if operating in the first state, use the functional block to set the at least one output based on the first input using a first function of the plurality of functions during a time period. The cell is further configured to, if operating in the second state and by using time-division multiplexing, use the functional block to set the at least one output based on the first input using the first function during only a part of the time period, and set the at least one output based on the second input using a second function of the plurality of functions during another part of the time period. Herein, the functional block is implemented using reversible logic.

As the cell is configurable such that each cell may perform both its own dedicated task, and also the task of a neighboring faulty cell, the embryonic cell according to the present disclosure provides self-healing capabilities without relying on the addition of additional spare cells. This may reduce the problem of area overhead present in traditional self-healing techniques. As the cell may also, using time-division multiplexing, perform both tasks during a single clock cycle, there is no required reduction in computational throughput even if a neighboring cell becomes faulty. Finally, as reversible logic allows for the function(s) of the cell to be carried out without any required loss of information, the computations performed by the cell does not necessarily result in an increase in entropy and the power dissipation caused by the cell may be reduced. Phrased differently, the embryonic cell according to the first aspect and as described herein provides a simultaneous overall optimization of the power, area and (timing) delay (PAD) product, based on a trade-off between the reduced area overhead of the embryonic cell and of networks in which the cell operates, the reduced timing delay due to time-division multiplexing, and the reduced power dissipation due to the reversible logic of the functional block of the cell, even though the latter also provides a slight increase in area due to the presence of one or more additional outputs needed for the reversibility.

In some embodiments, the embryonic cell may include a multiplexer. The multiplexer may be used for selection between the first input and the second input as input to the functional block.

In some embodiments, also the multiplexer may be implemented using reversible logic, thus further reducing the overall power dissipation caused by the embryonic cell.

In some embodiments, the functional block of the embryonic cell may include (or be) an arithmetic logic unit, ALU. As described earlier herein, it is envisaged that such an ALU is at least partly implemented using reversible logic.

In some embodiments, the functional block of the embryonic cell may include (or be) an artificial neural network (ANN). The neural network may be trained to perform the functions of e.g. an ALU otherwise implemented using various gates. As described earlier herein, it is envisaged that such a neural network is at least partly implemented using reversible logic. It is also envisaged that the neural network may perform other functions than that of an ALU, and that the neural network may be used to obtain functionality not possible with general ALUs.

According to a second aspect of the present disclosure, a self-healing system architecture is provided, including at least a first cell and a second cell both being an embryonic cell according to first aspect.

In some embodiments, the first input of the second cell may be the second input of the first cell. The system architecture may be further configured to determine whether the second cell is a failed cell. If it is determined that the second cell is a failed cell, the first cell may be configured to operate in the second state using the first function of the second cell as the second function of the first cell, i.e. such that, during the other half of the clock cycle, the first cell may perform the task of the second cell. By such time-division multiplexing, and with the possibility of one cell to perform both its own task and that of a failed cell without introducing additional timing delay, such a system architecture may provide an improved reliability without the need for additional redundant cells and additional timing delay, thereby reducing the overall required area overhead and without negatively affecting the throughput.

The present disclosure relates to all possible combinations of features recited in the claims. Objects and features according to the first aspect may be combinable with, or replaced with, objects and features described according to the second aspect, and vice versa.

Further objects and advantages of the various embodiments of the present disclosure will be described below by means of exemplifying embodiments.

Brief description of the drawings

Exemplifying embodiments will be described below with reference to the accompanying drawings, in which:

Figure 1 illustrates schematically an embryonic cell for a self-healing structure according to one or more example embodiments of the present disclosure;
Figure 2a illustrates schematically a functional block for such a cell including an artificial neural network implemented using reversible logic, according to one or more example embodiments of the present disclosure;
Figure 2b illustrates schematically a node of such a neural network according to one or more example embodiments of the present disclosure; and
Figure 3 illustrates schematically a self-healing system architecture including two or more embryonic cells, according to one or more embodiments of the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structures of the embodiments.

Detailed description

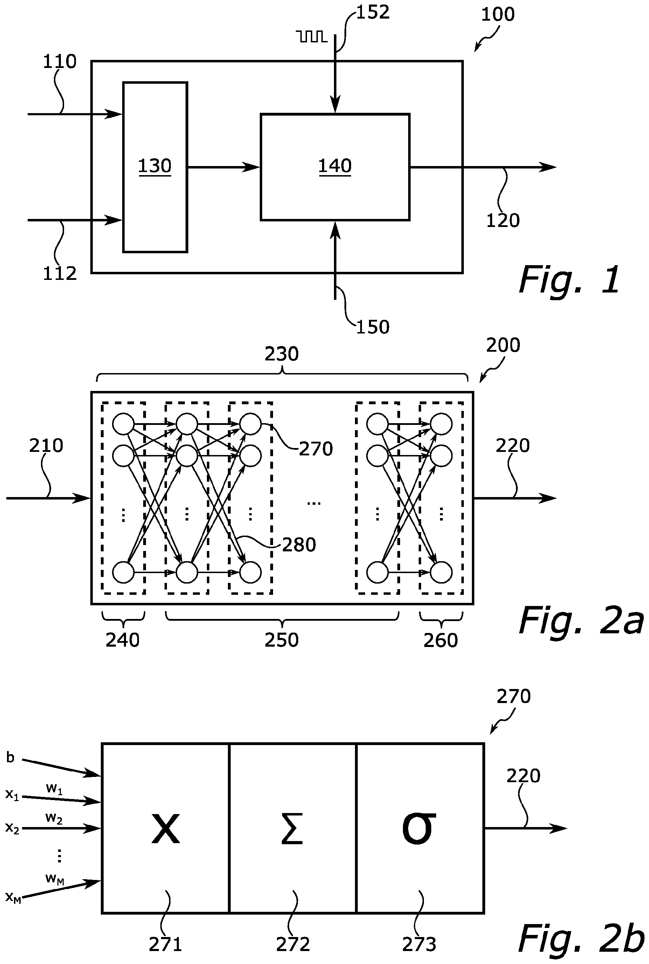

Various embodiments of an embryonic cell according to the present disclosure will now be described with reference to Figure 1.

Figure 1 illustrates schematically an embodiment of an embryonic cell 100 according to the present disclosure. The cell 100 includes a first input 110 and a second input 112. The cell 100 also has an output 120.

It is envisaged that there may be more than one output, and likewise also more than two inputs. The cell 100 further includes a functional block 140, a control input 150, a clock input 152 and a memory 160 with which the functional block 140 may communicate. Using selection means 130 (such as for example a multiplexer), it may be decided which of the first input 110 and the second input 120 that is to be input to the functional block 140, in order for the functional block 140 to map the selected input to the output 120 using a specific function. A plurality of such functions may for example be stored in advance in the memory 160, and the functional block 140 may choose which function to use based on a signal received on the control input 150. It may also be envisaged that the function which the functional block 140 is to use may be provided via the control input 150, and e.g. that the memory 160 may be updated accordingly with such a function for future use. The control input 150 may also instruct the selection means 130 which of the two inputs 110 and 112 it is to select.

The cell 100 may be instructed (configured) to operate in a first state. Such an instruction may for example be provided to the cell 100 via the control input 150. It may also be envisaged that the functional block 140 itself may figure out in which state to operate the cell 100. When it is determined that the cell 100 should operate in the first state, the cell 100 may use the functional block 140 to set the output 120 based on the first input 110, using a first function (out of e.g. a plurality of functions stored in the memory 160, or as received on e.g. the control input 150). The functional block 140 may use this first function during a time period. This time period may for example correspond to a clock cycle of a clock signal received on the clock input 152.

The cell 100 may also be instructed (configured) to operate in a second state different from the first state. Such an instruction may for example also be provided to the cell 100 via the control input 150, or in another way figured out by e.g. the functional block 150 of the cell 100. When it is determined that the cell 100 is to operate in this second state, time-division multiplexing may be used such that, during only a part of the clock cycle (e. g. during a first half of the clock cycle), the selection means 130 selects the first input 110 for the functional block 140, such that the functional block 140 may use the first function to map the first input 110 to the output 120. Then, during another part of the clock cycle (e.g. the remaining part, such as during the second half of the clock cycle), the selection means 130 may instead select the second input 112 for the functional block 140, such that the functional block 140 may instead use a second function to instead map the second input 112 to the output 120. The second function may e.g. be stored in the memory 160, and the functional block 140 may know which function to use based on a signal received on the control input 150, or e.g. receive this second function via the control input 150 itself. Consequently, if the cell 100 is operating in the second state, the cell 100 may first perform its "usual task" of mapping its first input 110 to the output 120 using the first function, and then perform another task by using another function to instead map the second input 112 to the output 120. As will be described later herein, this other/second function may be the function normally used for another cell to perform its task, and if this another cell becomes faulty (i.e. failed) the cell 100 may take over the responsibility of this another cell, and perform both its own task and the task of the faulty cell during a same clock cycle, thereby not causing any reduced computational throughput. For example, if the clock signal received on the clock input 152 is a square wave, it may be envisaged that the cell 100 and the functional block 140 performs the first task using the first function when triggered by a slope of a first kind (i.e. rising or falling), and performs the second task using the second function when triggered by a slope of a second kind (i.e. falling or rising) different from the first kind. Other possibilities, depending on how exactly the clock signal is produced, may of course also be possible. Although illustrated as a single arrow, it is envisaged herein that the control input 150 may include several signals for controlling various parts of the cell 100. The control input 150 may for example accept one or more control signals provided by one or more control units external to the cell 100.

Although referred to herein as a control "input", it is envisaged that the control input 150 may also be a bidirectional control input/output, such that it may be used also to send one or more signals from the cell 100 to e. g. other cells or to one or more control units external to the cell 100. Phrased differently, the various inputs, outputs and arrows in e.g. Figure 1 are schematic, and only represent a functionality of the cell 100 and the components therein rather than explicit physical locations of one or more physical outputs/inputs.

In the cell 100, and in other cells described herein, an input/output or other connection between two or more components in/of the cell (although illustrated as single lines/arrows) may also include multiple channels, such that for example a plurality of bits may be received/output/transferred simultaneously.

In some embodiments of the cell 100, the functional block 140 may for example be (or include) an arithmetic logic unit (ALU), including the combinational logic which is necessary to implement one or more arithmetic and/or logic operations/functions, such as for example ADD, SUBTRACT, AND, OR, XOR, NAND, NOR, XNOR, NOT, Data buffer, etc. The ALU may have access to one or more data registers that it may use in order to perform a particular function. The data registers may for example be located in the memory 160, or stored otherwise for example within the functional block 140 itself.

To reduce power consumption, the functional block 140 is at least partly implemented using reversible logic. By using appropriate gates, the functions performed by the functional block 140 may be such that a particular output only matches one particular input, i.e. such that there is a 1:1 correspondence between input and output. To achieve such a reversible behavior, examples of suitable gates that may be used include e.g. NOT gates, CNOT gates, Input Toffoli gates, Peres gates, double Peres gates, etc. Other gates needed, such as for example OR gates and similar may be made reversible by the addition of additional, ancillary and/or garbage inputs and outputs where necessary. It is envisaged that although such additional inputs/outputs may increase the area overhead, the savings with regards to power consumption outweighs the increased area. In general, the present disclosure provides an embryonic cell wherein such trade-offs between the various variables that are to be optimized are carefully considered to simultaneously optimize the power-area-delay (PAD) product.

At least part of the various structures and devices envisaged herein may be implemented using for example VHDL (or other equivalents) and one or more field-programmable gate-arrays (FPGAs). For validation purposes, such an implementation of a particular ALU setup was performed both for the embryonic cell as disclosed herein, and also for a standard architecture using classic (non-reversable) logic gates in the functional block. It was shown that although the area overhead increased (9% for the classical logic gate version, and 11% for the embryonic cell as disclosed herein), the power consumption was reduced by almost 20% (79 mW for the classical logic gate version, versus 64 mW for the embryonic cell as disclosed herein). Consequently, it has been shown that a small increase in area overhead may result in an even larger reduction of power consumption, thus verifying the advantages of the embryonic cell as disclosed herein.

Other examples of functional blocks will now be described with reference to Figures 2a and 2b.

Figure 2a illustrates schematically an example embodiment of a functional block 200 according to the present disclosure. Here, the functional block 200 has an input 210, an output 220 and further includes a neural network 230. The neural network 230 includes an input layer 240, one or more hidden layers 250, and an output layer 260. Here, each layer of the neural network 230 may contain different numbers of nodes 270, and there is included connections 280 which interconnects the nodes 270 in different layers. Exactly how many nodes there are in each layer, and exactly which connections that exist between different layers, may be specified in accordance with the type of neural network that is to be used, and the desired functionality thereof. There may also be more than one input 210 and more than one output 220. It is envisaged that the numbers of nodes in the input layer 240 and the output layer 260, respectively, are such that they at least may provide for the number of inputs and outputs. For example, for a single input 210, the input layer 240 includes at least one node 270. For two inputs 210, the input layer includes at least two nodes 270, etc. The same applies for the output layer 260, such that there are at least as many nodes in the output layer 260 as there are outputs 220.

Figure 2b illustrates schematically an example of a node 270. The node 270 is assumed to be the j:th node in a particular layer, and receives one or more inputs $x_m$, where m is an integer between 1 and M and where M is an integer equal to the total number of inputs to the node 270. The inputs may e.g. originate from nodes in another, previous layer to the layer the j:th node 270 belongs to. There may also be provided e.g. a bias b. To each input $x_m$ is assigned a specific weight $w_m$, associated with the connection between the node 270 and the other node which has the input $x_m$ as its output. In a multiplier block 271, each input $x_m$ is multiplied with its corresponding weight $w_m$. In a following adder block 272, the products of the weight and inputs are added together (and also with the bias b, if present) to form a sum

$$a_j = \sum_{m=1}^{M} w_m \cdot x_m + b$$

. In a final non-linearity block 273, the sum $a_j$ is passed through a non-linear function $\sigma$ (for example a sigmoid function) in order to determine whether the output of the node is activated or not. Finally, the result of this function provides the output $o_j = \sigma(a_j)$ of the j:th node 270.

After the one or more inputs 210 have propagated through the various layers 240, 250, 260 of the neural network 230, the one or more outputs 220 from the output layer 260 may be compared with a desired result, and the deviation between the output 220 and the desired result can be used to train the network using e. g. backpropagation to update the various weights (i.e. the connections between different layers) until the neural network 230 is determined to be ready for actual use. For an already trained network, the neural network 230 may know how to properly estimate a desired function, i.e. a desired mapping between the one or more inputs 210 and the one or more outputs 220. The neural network 230 may thereby be used to e.g. emulate the behavior of an ALU, or perform other functions as needed.

Herein, it is envisaged that all of the various blocks 271, 272 and 273 of the node 270 are at least partially implemented using reversable logic. As a result, less information is lost, and the power consumption of the network may be reduced (c.f. e.g. Landauer's principle, stating that a loss of one information bit will generate approximately k*T*ln(2) Joules of thermal energy (where k is Bolzmann's constant, and T the absolute temperature of the computation).

For validation purposes, an implementation of a particular artificial neural network setup was performed both for the reversible logic case as disclosed here, and also for a standard architecture using classic (non-reversable) logic gates. It was shown that the power consumption was reduced by approximately 17% (96 W for the classical logic gate version, versus 79 W for the reversible logic case as disclosed herein).

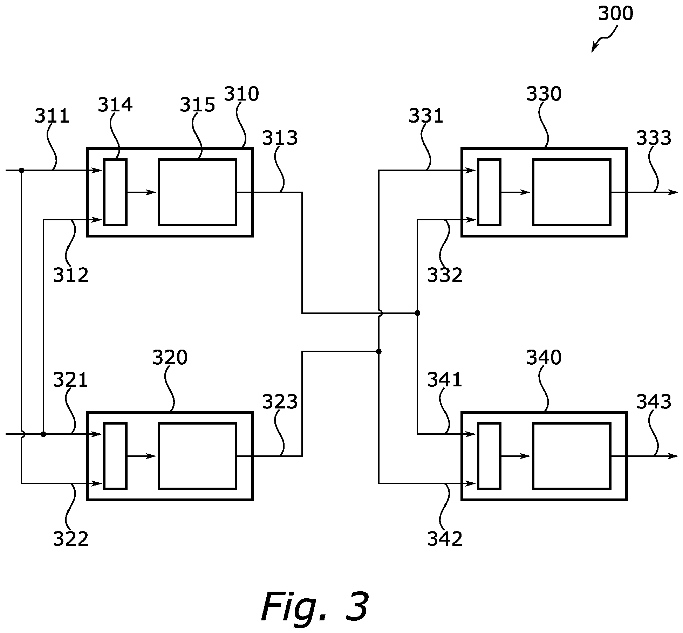

With reference to Figure 3, various embodiments of a self-healing system architecture will now be described in more detail.

Figure 3 illustrates schematically an embodiment of a self-healing system architecture 300 according to the present disclosure. The architecture 300 includes at least a first embryonic cell 310 and a second embryonic cell 320. Both of the cells 310 and 320 are embryonic cells such as described above with reference to Figures 1, 2a and 2b. The first cell 310 and the second cell 320 are connected such that a first input 311 of the first cell 310 is also a second input 322 of the second cell 320, and such that a second input 312 of the first cell 310 is also a first input 321 of the second cell 320. The outputs 313 and 323 of the first cell 310 and the second cell 320, respectively, are further connected to first inputs 331 and 341 and second inputs 332 and 342 of further cells 330 and 340, respectively, as illustrated in Figure 3. The further cells 330 and 340 also has respective outputs 333 and 343.

With the configuration of the cells as shown in Figure 3, it is envisaged that during normal operation of the cells 310 and 320, the first cell 310 may perform its "own" task, using a first function to map its first input 311 to its output 313 as described earlier herein. This by using its selection means 314 to select the first input 311 as the input to its functional block 315. As described earlier, the various cells are also provided with control inputs and clock signals, and the first cell 310 may for example perform its own task during a full clock cycle. This state, when the cells operate as intended, may be referred to as a "first state".

It is also envisaged that if for example the second cell 320 is determined to not function properly (i.e. it has failed or is faulty), the first cell 310 may instead be configured to operate in a second state different from the first state. In this second state, the first cell 310 may perform both its own function and also that of the failed second cell 320. The selection means 314 are used to, depending on whether the first cell 310 is to perform its own function or that of the second cell 320, select the appropriate input to the functional block 315. For example, when in the second state, the first cell 310 may first perform its own task during e.g. part of a full clock cycle, and then perform also the task of the failed second cell 320 during another part of the full clock cycle. By providing the first input 321 of the second cell 320 as the second input 312 of the first cell 310, and by using the first function of the second cell 320 as the second function of the first cell 310, the first cell 310 may take over the responsibility of the second cell 320 during this another part of the full clock cycle. By using such time-division multiplexing, the failure of the second cell 320 may be compensated for by the first cell 310 without adding additional timing delay, and thereby without further reducing the throughput. The exact order in which the first cell 310 is to perform its own task and the task of the failed second cell 320 may for example be communicated to the first cell 310 using a control input, as discussed earlier herein.

That the second cell 320 has failed may be evaluated e.g. by the cell 320 itself, or by one or more additional controllers (not illustrated) using e.g. various testing schemes or similar. The failure of the second cell 320 may be communicated to the first cell 310 using a control input (such as e.g. the control input 150 discussed earlier with reference to Figure 1).

During normal operation, the output 323 of the second cell 320 would be provided as the first input 331 of the further cell 330. During failure of the second cell 320, the output 323 of the second cell 320 would instead correspond to (or be replaced by) the output 313 of the first cell 310. To compensate also for this, it is envisaged that, during failure of the second cell 320 and i.e. while the first cell 310 is operating in the second state, the further cell 330 would be instructed (e.g. by a control unit using via a control input) to instead use its second input 332 as input to its functional block, as this second input 332 is connected to the output 313 of the first cell 310 (as illustrated in Figure 3). Thus, normal operation of the full architecture may be maintained if e.g. the second cell 320 fails. In other situations, e.g. during failure of other cells than the second cell 320, other instructions may be sent to the various remaining cells, such that one of them can take over the responsibility of the failed cell, and such that the outputs are routed correctly such that the cell which were to process the output of the failed cell now receives a corresponding output from another cell, on another one of its inputs.

In summary, by combining the use of such a self-healing architecture, where no additional timing delay is introduced, with the use of reversible logic to implement the various functional blocks of the embryonic cells, the present disclosure provides a solution wherein multiple parameters are optimized simultaneously in a way that the overall power-area-delay (PAD) product is improved. As described earlier herein, this is achieved by the combination of:

> a) The self-healing architecture providing an improved reliability, where one cell may perform both its own task and the task of another cell without additional timing delay. This without the need for redundant cells, such that the area overhead may also be reduced; and
> b) The use of reversible logic to lower power consumption, wherein the needed ancillary and/or garbage inputs and outputs required for such reversible logic provides an increase in overhead area, but still such that the overall benefits of the reduced power consumption outweighs such an increase.

**Claims**

1. An embryonic cell (100) for a self-healing system architecture, said cell including at least a first input (110) and a second input (112), at least one output (120), and at least one functional block (140, 200) configurable to set the at least one output based on at least one of the first input and the second input using either one of a plurality of functions,

wherein the cell is configurable to operate in a first state or a second state different from the first state, and:

if operating in the first state: use the functional block to set the at least one output based on the first input using a first function of the plurality of functions during a time period of a single clock cycle, and

if operating in the second state and by using time-division multiplexing: use the functional block to set the at least one output based on the first input using the first function during only a part of the time period triggered by a clock signal slope of a first kind, and set the at least one output based on the second input using a second function of the plurality of functions during another part of the time period triggered by a clock signal slope different from the first kind, wherein the functional block is implemented using reversible logic.

2. The cell of claim 1, including a multiplexer (130) for selection between the first input and the second input as input to the functional block.

3. The cell of claim 2, wherein the multiplexer is implemented using reversible logic.

4. The cell of any one of claims 1 to 3, wherein said functional block comprises an arithmetic logic unit, ALU.

5. The cell of any one of claims 1 to 4, wherein said functional block comprises a neural network (230).

6. A self-healing system architecture (300), including at least a first cell (310) and a second cell (320) both being an embryonic cell according to any one of claims 1 to 5.

7. The system architecture of claim 6, wherein the first input (321) of the second cell is the second input (312) of the first cell, and wherein the system architecture is further configured to:

determine whether the second cell is a failed cell, and

if it is determined that the second cell is a failed cell, configure the first cell to operate in the second state using the first function of the second cell as the second function of the first cell.

**Patentansprüche**

1. Embryonale Zelle (100) für eine selbstheilende Systemarchitektur, wobei die Zelle mindestens einen ersten Eingang (110) und einen zweiten Eingang (112), mindestens einen Ausgang (120) und mindestens einen Funktionsblock (140, 200), der dazu konfigurierbar ist, den mindestens einen Ausgang basierend auf mindestens einem von dem ersten Eingang und dem zweiten Eingang unter Verwendung einer von einer Vielzahl von Funktionen einzustellen, umfasst,

wobei die Zelle dazu konfigurierbar ist, in einem ersten Zustand oder einem zweiten Zustand, der anders als der erste Zustand ist, zu funktionieren, und:

falls sie in dem ersten Zustand funktioniert: Verwenden des Funktionsblocks, um den mindestens einen Ausgang basierend auf dem ersten Eingang unter Verwendung einer ersten Funktion der Vielzahl von Funktionen während eines Zeitraums eines einzigen Taktzyklus einzustellen, und

falls sie in dem zweiten Zustand funktioniert, und unter Verwendung von Zeitmultiplex: Verwenden des Funktionsblocks, um den mindestens einen Ausgang basierend auf dem ersten Eingang unter Verwendung der ersten Funktion nur während eines Teils des Zeitraums, der durch eine Taktsignalflanke einer ersten Art ausgelöst wird, einzustellen, und den mindestens einen Ausgang basierend auf dem zweiten Eingang unter Verwendung einer zweiten Funktion der Vielzahl von Funktionen während eines anderen Teils des Zeitraums, der durch eine Taktsignalflanke, die anders als die erste Art ist, ausgelöst wird, einzustellen, wobei der Funktionsblock unter Verwendung einer reversiblen Logik umgesetzt wird.

2. Zelle nach Anspruch 1, umfassend einen Multiplexer (130) zur Auswahl zwischen dem ersten Eingang und dem zweiten Eingang als Eingang für den Funktionsblock.

3. Zelle nach Anspruch 2, wobei der Multiplexer unter Verwendung einer reversiblen Logik umgesetzt ist.

4. Zelle nach einem der Ansprüche 1 bis 3, wobei der Funktionsblock eine arithmetische Logikeinheit, ALU, umfasst.

5. Zelle nach einem der Ansprüche 1 bis 4, wobei der Funktionsblock ein neuronales Netzwerk (230) umfasst.

6. Selbstheilende Systemarchitektur (300), umfassend mindestens eine erste Zelle (310) und eine zweite Zelle (320), die beide embryonale Zellen nach einem der Ansprüche 1 bis 5 sind.

7. Systemarchitektur nach Anspruch 6, wobei der erste Eingang (321) der zweiten Zelle der zweite Eingang (312) der ersten Zelle ist, und wobei die Systemarchitektur ferner konfiguriert ist zum:

Bestimmen, ob die zweite Zelle eine defekte Zelle ist, und
falls bestimmt wird, dass die zweite Zelle eine defekte Zelle ist, Konfigurieren der ersten Zelle, damit sie in dem zweiten Zustand funktioniert, unter Verwendung der ersten Funktion der zweiten Zelle als die zweite Funktion der ersten Zelle.

## Revendications

1. Cellule embryonnaire (100) pour une architecture de système d'autoguérison, ladite cellule comprenant au moins une première entrée (110) et une deuxième entrée (112), au moins une sortie (120), et au moins un bloc fonctionnel (140, 200) configurable pour régler la au moins une sortie sur la base d'au moins une parmi la première entrée et la deuxième entrée en utilisant une d'une pluralité de fonctions,

dans laquelle la cellule est configurable pour fonctionner dans un premier état ou un deuxième état différent du premier état, et.
en cas de fonctionnement dans le premier état : utiliser le bloc fonctionnel pour régler la au moins une sortie en fonction de la première entrée en utilisant une première fonction de la pluralité de fonctions pendant une période de temps d'un seul cycle d'horloge, et
en cas de fonctionnement dans le deuxième état et en utilisant le multiplexage temporel : utiliser le bloc fonctionnel pour régler la au moins une sortie sur la base de la première entrée en utilisant la première fonction pendant seulement une partie de la période de temps déclenchée par une pente de signal d'horloge d'un premier type, et régler la au moins une sortie sur la base de la deuxième entrée en utilisant une deuxième fonction de la pluralité de fonctions pendant une autre partie de la période déclenchée par une pente de signal d'horloge différente du premier type ,
dans laquelle le bloc fonctionnel est implémenté en utilisant une logique réversible.

2. Cellule selon la revendication 1, comprenant un multiplexeur (130) de sélection entre la première entrée et la deuxième entrée comme entrée du bloc fonctionnel.

3. Cellule selon la revendication 2, dans laquelle le multiplexeur est mis en oeuvre en utilisant une logique réversible.

4. Cellule selon une quelconque des revendications 1 à 3, dans laquelle ledit bloc fonctionnel comprend une unité logique arithmétique, ALU.

5. Cellule selon une quelconque des revendications 1 à 4, dans laquelle ledit bloc fonctionnel comprend un réseau neuronal (230).

6. Architecture de système d'auto-guérison (300), comprenant au moins une première cellule (310) et une deuxième cellule (320) étant toutes deux une cellule embryonnaire selon une quelconque des revendications 1 à 5.

7. Architecture de système selon la revendication 6, dans laquelle la première entrée (321) de la deuxième cellule est la deuxième entrée (312) de la première cellule, et dans laquelle l'architecture de système est en outre configurée pour :

déterminer si la deuxième cellule est une cellule défaillante, et
s'il est déterminé que la deuxième cellule est une cellule défaillante, configurer les premières cellules pour qu'elles fonctionnent dans le deuxième état en utilisant la première fonction de la deuxième cellule comme deuxième fonction de la première cellule.

*Fig. 1*

*Fig. 2a*

*Fig. 2b*

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016371147 A1

- WO 2010060923 A1

**Non-patent literature cited in the description**

- n embryonic array with improved efficiency and tolerance. **CANHAM R et al.** EVOLVABLE HARDWARE 2003. PROCEEDINGS. NASA/DOD CONFERENCE ON JULY 9-11, 2003, PISCATAWAY, NJ, USA. IEEE, 09 July 2003, 275-282